# EUROPEAN PATENT SPECIFICATION

(11) **EP 2 301 726 B1**
(45) Date of publication and mention of the grant of the patent: **16.05.2012**
(21) Application number: 09171249.7
(22) Date of filing: 24.09.2009
(51) Int. Cl.: B25J 17/02, B25J 18/02, F16D 3/06

(54) **Telescopic shaft for an industrial robot according to the delta concept**
Teleskopstange für Industrieroboter nach dem Deltakonzept
Tige télescopique pour robot industriel selon le concept delta

(43) Date of publication of application: 30.03.2011
(73) Proprietor: CAMA 1 SpA, 20124 Milano (IT)
(72) Inventor: Bellante, Daniele, 23846 Garbagnate Monastero (LC) (IT)
(74) Representative: Zardi, Marco

(56) References cited:
- EP-A- 1 135 238
- FR-A- 2 600 384
- US-A- 5 740 699
- US-A1- 2008 257 092

## Description

### Field of the invention

The invention relates to a telescopic shaft for use in an industrial robot according to the delta concept and to a robot comprising such a shaft.

### Prior art

The robot according to the delta concept, also called delta-robot, is known from US-A-4976582. Delta robots are widely used, for example, in the foodstuffs industry e.g. to precisely handle small articles in a packaging machine, in the field of surgery and medical science, and in many other fields.

A delta robot comprises a base section and a movable plate connected to a number of jointed struts. The movable plate can be positioned in a certain working area and bears a rotatable tool or handle device. The provision of a motor to operate said tool, fixed directly to the movable plate, has the disadvantage of increased mass and inertia of moving parts. Hence, a telescopic shaft is normally arranged between the movable plate and a motor located in the base section. Said telescopic shaft is also known as the fourth axis of the delta robot.

A known coaxial telescopic shaft comprises essentially an outer tube arm carrying a first end joint for receiving the input torque, and a coaxial inner arm slidable inside the outer arm, and carrying a second end joint for transmitting the torque to the tool of the movable plate.

The telescopic shaft of a delta robot must operate at a considerable speed, coping with a high torque and considerable linear speed of the moving plate. Hence, it is required to be light but highly resistant to both torsional and flexional stress. Moreover, the delta-robot is often used in environments where health and cleanliness standards are very high, such as food industry.

A conventional telescopic arm is not adapted to meet such requirements, so efforts have been made in the prior art to find more appropriate embodiments of a telescopic shaft for use as the fourth axis of a delta robot.

EP-A-1 135 238 discloses a delta robot comprising a telescopic arm with an inner axle and an outer tube displaceable relatively to the inner axle in a longitudinal direction, a torsional rigid bushing is arranged in a stationary manner on the outer tube, and a guiding device is arranged on the inner axle. This telescopic arm however has the drawbacks of difficult access to the inside, and need of precise coupling between the bushing and the sliding axle. Another drawback is the need of lubrication, which is not appreciated by the pharmaceutical and food industry, due to risk of contamination of the product.

### Summary of the invention

The problem underlying the invention is to provide delta robot with a novel structure of the telescopic fourth axis, adapted to meet the requirements of rigid torsional and flexional construction, easy cleaning and maintenance, precise coupling between the sliding parts without an expensive machining.

The problem is solved with a telescopic shaft according to claim 1.

The invention further provides a robot according to claim 2 comprising such a telescopic shaft, and a method according to claim 13 for manufacturing such a robot.

The polygonal section of the outer tube arm may have any number of sides. Preferably the cross section of the outer tube arm is four-sided, more preferably rectangular or square.

The polygonal cross section of the outer arm allows a torsionally rigid and torque-transmitting shape-engagement with the head portion of the inner arm. According to an aspect of the invention, the head portion of the inner arm has a plurality of elastically deformable elements abutting against parts of the internal surface of the outer arm so to allow clearance-free sliding capable of transmitting torque. In a preferred embodiment, the elastically deformable elements have contact faces abutting against the internal surface of the outer arm, and more preferably said elastically deformable elements are arranged to provide at least one of said contact faces in contact with each of inner sides of the polygonal cross section of the outer arm.

In a preferred embodiment, the head portion of the inner arm is obtained with a bushing associated to the same arm. Said bushing can be fixed (for example glued) or associated in a reversible manner to the inner arm.

More preferably, said bushing comprises a main body part and a plurality of said elastically deformable elements in the form of tongues diverging from said body part, and abutting against the internal surface of the outer tube arm.

Preferably, each of said tongues has substantially a triangular shape, with a bevelled peak and side cuts defining the contact faces with the outer tube arm. In a more preferred embodiment, each triangular tongue has a tip region with two contact faces disposed to contact adjacent faces of the internal surface of the outer tube arm, for example two adjacent surfaces of a square outer tube arm. Preferably the contact is near the corner formed by the two adjacent surfaces. For example, an effective coupling with a square outer tube arm is obtained with a cylindrical bushing fixed to the inner arm, each end of the bushing having four cross-arranged elastic tongues, directed towards the corners of the square tube arm and provided with two side cuts each.

According to another aspect of the invention, the removable cap has suitable guide and/or sealing means acting on the inner arm. In one embodiment, the end cap has a passing-through hole, having the same shape and dimensions of the cross section of an inner tube arm of the telescopic shaft, and providing a sliding guide coupling for said inner arm. For example a circular cross-section inner tube arm slides through a circular hole of the removable cap, the diameter of the hole matching the outside diameter of the inner arm, with a small clearance to allow free displacement of the inner arm relative to the cap and, hence, relative to the outer arm.

In one embodiment, the removable cap has a plurality of elastically deformable tabs disposed around an edge of said passing-through hole, said tabs having respective contact surfaces abutting against said inner tube arm and providing a further guide means for the same.

In operation, one of the inner and outer arms receives an input torque, which is transmitted to the other of the inner and outer arms. For example the inner arm or the outer arm has an articulated joint connected to a motor in a base plate of the robot; the other arm delivers the torque to a movable plate of the robot. One aspect of the invention is that at least a major portion of said input torque is transmitted by means of the sliding, torsionally rigid coupling between the head portion of the inner arm, and the polygonal outer tube arm.

According to different embodiments of the invention, the inner arm may be a tube arm having a circular or non-circular cross section. In embodiments with a non-circular inner tube arm, e.g. a square tube arm, the hole of the removable cap fixed to the outer arm is shaped accordingly, and as a consequence the coupling between the removable cap and the inner arm may have a certain torsional rigidity and may transmit a minor portion of the input torque. The majority of the torque however passes through the specific torsionally rigid coupling at the sliding head of the inner arm.

According to a further aspect of the invention, the telescopic shaft is self-lubricant. The sliding parts such as the inner arm, the head of the inner arm and/or the end cap, are realized with a self-lubricant material. A preferred material is carbon fibre; another preferred material are acetal resins and more preferably polyoxymethylene (POM) resins.

The advantages of the invention are presented below.

A clearance-free, rigid torsional coupling is established between the outer arm and the head of the inner arm, allowing transmission of high torques and accurate control of the rotation. The preferred elastically deformable abutments further provide a clearance recovery effect, making the coupling less sensitive to wear. Furthermore, clearance compensation given by the elastically deformable parts avoids the need of a precise matching between the sliding parts and related expensive manufacturing process. Possible shape errors of the inner or outer arm are compensated. Another advantage is that the end cap of the outer arm can be quickly removed providing easy access for maintenance, inspection or cleaning purposes.

The distance between the sliding head of the inner arm and the fixed end cap increases the flexional strength of the whole telescopic shaft, when the shaft is partially extended, i.e. in most conditions of use. According to one of the preferred features, the use of self-lubricating materials avoids the need to apply lubricants on the sliding parts and related risk of contaminating the environment, e.g. food products handled by the robot.

The advantages will be more evident with the following detailed description of preferred embodiments, reported as non-limitative examples.

### Description of the figures

Fig. 1 is a view of a delta-robot according to a preferred embodiment of the invention.
Fig. 2 is a longitudinal section of the telescopic shaft of the robot of Fig. 1.
Figs. 3 and 4 are details III and IV of Fig. 2.
Fig. 5 is a cross section of the telescopic shaft according to line V-V of Fig. 3.
Fig. 6 is a view of the bushing forming the head part of the inner sliding arm of the telescopic shaft (10) of Fig. 2.
Figs. 7 and 8 are views of the sealing cap of the outer arm of the telescopic shaft.
Fig. 9 is a view of the inner slidable arm of the telescopic shaft of Fig. 2.
Fig. 10 shows a cross-sectional detail of the mounting of the head bushing of the inner arm, according to another embodiment of the invention.
Fig. 11 is a cross section according to A-A as in Fig. 10.
Fig. 12 is a view of a delta-robot according to a variant of the embodiment of Fig. 1.

### Detailed description of a preferred embodiment

A delta-robot 1 has a base section 2 and a movable plate 3. The movable plate 3 is moved in a working space of robot 1, below the base section 2, by means of several jointed pull rods 4, operated by arms 5 and respective motors 6.

A variable-length, telescopic shaft 10 is arranged between the base section 2 and the movable plate 3. A motor 11 associated to the base section 2 can rotate a tool-carrying hub 12 of the movable plate 3, by means of said telescopic shaft 10. The shaft has a coaxial arrangement with an outer tube arm 13 and an inner arm 14 sliding in said outer tube arm 13.

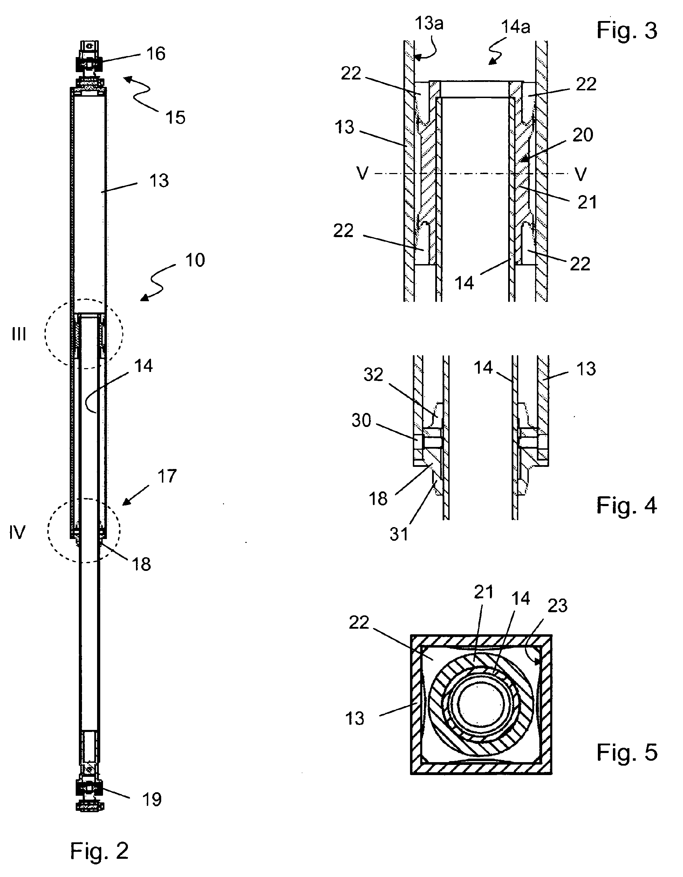

The structure and details of a preferred embodiment of the telescopic shaft 10 is shown in greater detail in Figs. 2 to 9. The outer arm 13 has a first end 15 carrying a first articulated joint 16 for connection to the shaft of motor 11, and a distal end 17, opposite to the base section 2, which is closed with a removable end cap 18. The inner arm 14 has an end carrying another articulated joint 19, for coupling to said hub 12.

In the illustrated example, the outer arm 13 is a square tube and the inner arm 14 is a round tube with circular cross section (Fig. 5). In another embodiment, both the outer arm 13 and inner arm 14 are square tubes.

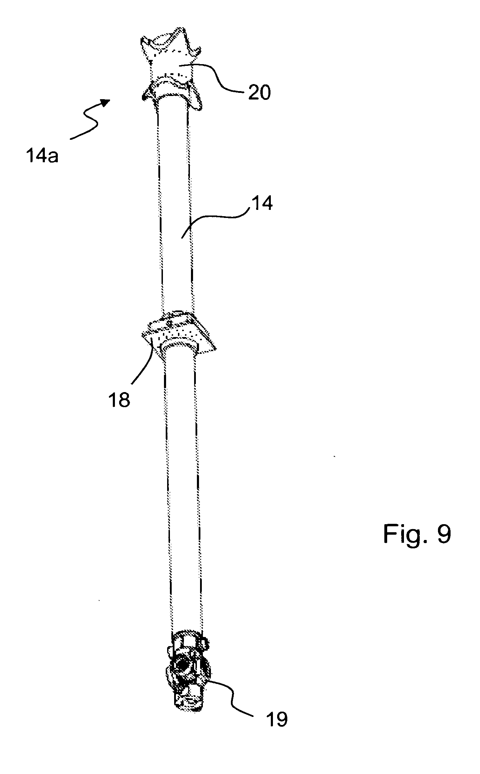

The inner arm 14 is guided in the outer arm 13 by a sliding bushing 20, forming a head portion 14a of the inner arm (Figs. 3 and 9), and by a suitable guide passage of the end cap 18. Said guide passage is defined in the given example by a collar 31 and guide means in the form of tabs 32 (Fig. 4).

In a preferred embodiment, the bushing 20 has a cylindrical hollow body 21 suitably fixed to the top of inner arm 14. For example, the bushing 20 can be forced on the inner arm 14, or glued with epoxy resins to said inner arm 14 (Fig. 3). In further embodiments, the bushing 20 is associated in a reversible manner to the inner arm 14, to be replaceable. An example will be given below.

The bushing 20 has a plurality of elastically deformable radial tongues 22, diverging from the body 21 and abutting against the inner surface 13a of the outer tube arm 13. More in detail, and in a further preferred form, the bushing 20 has a first and a second plurality of elastic tongues at opposite ends of the body 21.

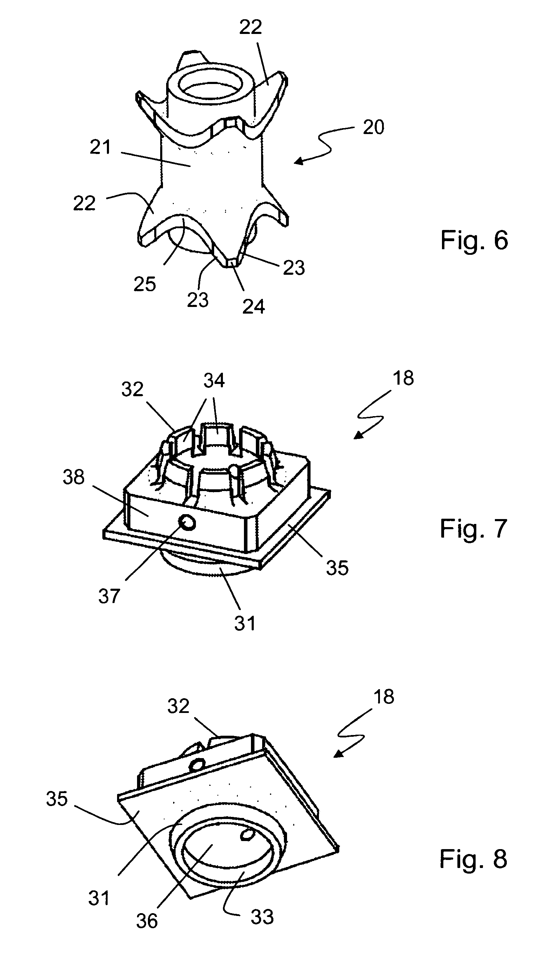

In the example, two sets of tongues 22 are provided at opposite upper and lower ends of the body 21, diverging in opposite radial directions as seen in Fig. 3 and Fig. 6. Each set has four cross-arranged tongues 22, as seen in the section of Fig. 5, with contact faces 23 against the inner surface 13a. of the outer tube 13. Each tongue 22 has substantially a triangular shape, with a cut forming a bevelled peak 24, and side cuts defining the contact faces 23.

According to preferred features, the undeformed tongues 22 rest at an angle of about 30 to 60 degrees, preferably around 45 degrees, with the axis of the bushing 20, as can be seen in Fig. 6. Adjacent tongues 22 are connected by a curved portion 25 allowing flexibility for clearance compensation.

The sliding bushing 20 provides an effective and clearance-free guide means with reduced friction, and at the same time a rigid torsional coupling between the inner arm 14 and outer arm 13. The bushing 20 may be formed as a single piece, having the elastic tongues 22 integrally formed with the cylindrical part 21. A preferred material of said bushing 20 is a plastic material such as Delrin®.

In alternative embodiments, the outer tube may have a polygonal cross section, other than the square section of the figures, and/or the head part 14a may have any number of elastically deformable parts such as the tongues 22, provided that a suitable sliding and torsionally-rigid coupling is established between the arms 13 and 14 by means of said head part 14a abutting against the outer tube.

A detail of the guide means at the distal end 17 of the outer arm 13 is shown in Figs. 4 and 7-8. The cap 18 is fixed with a couple of screws 30 to the outer tube arm 13, and provides a sliding seat for the inner arm 14 by means of a passing-through hole 36. A bottom collar 31 defines a first contact and guide surface 33 for the inner tube 14; a plurality of tabs 32 are arranged around one edge of the hole 36; each tab 32 has a contact surface 34, so to form a further guide means of said inner arm 14. The coupling with the inner arm 14 is precise, to allow free sliding but avoid clearance. The collar 31 and the tabs 32 are formed at opposite sides of a square part 35 closing the square aperture at the distal end 17 of the tube arm 13. Holes 37 for the screws 30 are provided on a body 38 of the cap 18 (Figs. 7, 8).

According to an alternative embodiment (not shown), the cap 18 may provide sealing means such as a seat for a seal, e.g. a spring-loaded seal, at the sliding coupling with the inner arm 14.

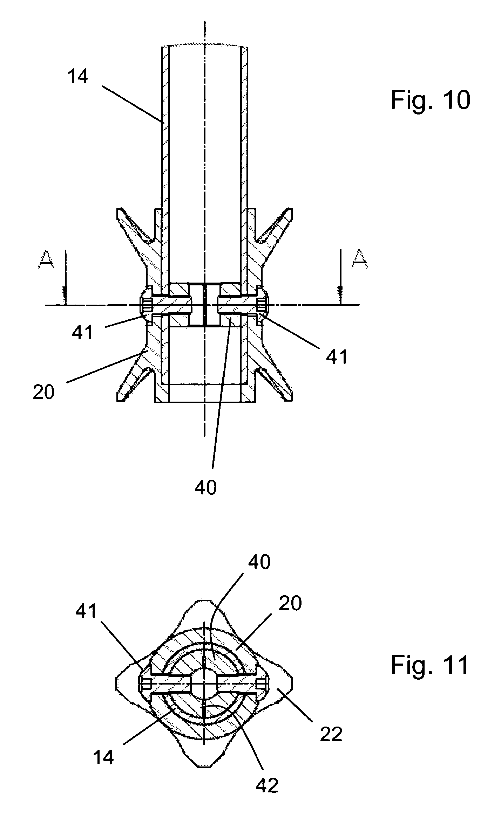

Turning to Figs. 10 and 11, an embodiment of a bushing 20 removable from the inner arm 14 is shown. The bushing 20 is fixed with one or more screw(s) 41 engaged in threaded holes of a metal ring 40 firmly inserted in the inner tube arm 14. The metal ring 40 is preferably an open ring, for example having an open section 42, to firmly contact the inner surface of the tube arm 14 (Fig. 11). The bushing 20 can be easily replaced by removing the screws 41.

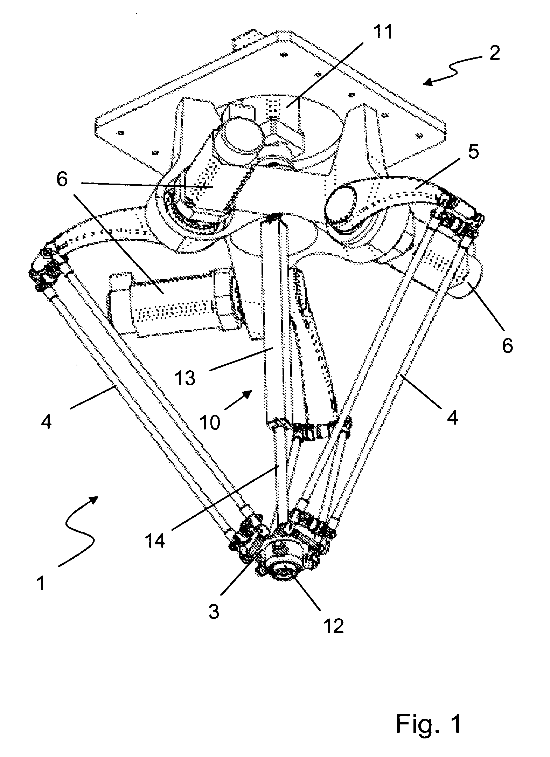

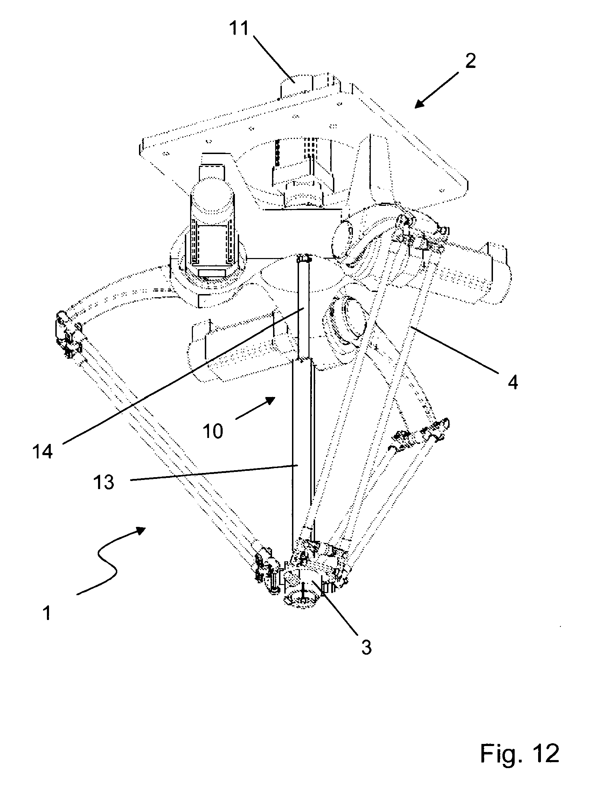

Fig. 12 illustrates another embodiment of a delta robot, which is equivalent to that of Fig. 1, and where the arrangement of the arms 13 and 14 is reversed. The outer tube arm 13 is joined to the movable plate 12; the inner arm 14 is joined to the motor 11 of the base section 2. This arrangement can be preferred to avoid interference between the edges of the outer tube arm 13 and the base section 2.

In operation, the movable plate 3 is displaced in space by the rods 4, according to the concept of the delta robot. A tool or a gripper element mounted on the hub 12 is rotated by the motor 11, via the fourth-axis telescopic shaft 10. Torque delivered by the motor 11 is transmitted via the torsional coupling of the sliding head part 20, which is fixed to the sliding inner arm 14 and engaged with the outer arm 13 in a torsionally rigid manner. The cap 18 can be easily removed by unscrewing the screws 30, giving easy access to the inside of the telescopic shaft 10 for maintenance and/or cleaning.

## Claims

1. A telescopic shaft (10) for use in a robot (1) according to the delta concept, the telescopic shaft (10) having opposite ends to be connected to a base section (2) and to a movable plate (3) of said robot, when the telescopic shaft is mounted into the robot, the telescopic shaft comprising an outer tube arm (13) carrying a first end joint (16) and a coaxial inner arm (14) slidable inside the outer tube arm and carrying a second end joint (19), said telescopic shaft being adapted to transmit a torque from one to another of said inner arm and outer arm, and wherein:
- said outer tube arm (13) has a polygonal cross section;
- said inner arm (14) has a head portion (14a) shaped so as to provide a sliding and torsionally rigid coupling with the polygonal outer tube arm (13), adapted to transmit at least a major portion of said torque between said outer arm and inner arm;
- a distal end (17) of said outer tube arm (13), opposite to said first end joint (16), is sealed with a removable cap (18), said cap providing a sliding guide coupling (31, 32) for the inner arm (14).

2. An industrial robot (1) according to the delta concept, comprising a base section (2); a movable plate (3) connected to the base section by means of an arm system (4), and a telescopic shaft (10) according to claim 1 with opposite ends connected to the base section and to the movable plate respectively.

3. A robot according to claim 2, the outer tube arm (13) having a four-sided polygonal cross section such as rectangular or square, preferably a square cross section.

4. A robot according to claim 2 or 3, said head portion (14a) of the inner arm (14) being provided with a plurality of elastically deformable elements (22) abutting against the internal surface (13a) of the outer tube arm (13).

5. A robot according to claim 4, said elastically deformable elements (22) having contact faces (23) abutting against the internal surface (13a) of the outer tube arm, the head portion (14a) of the inner arm being arranged so to have at least one contact face (23) in contact with each internal face of the polygonal cross section of the outer tube arm (13).

6. A robot according to claim 5, the inner arm comprising a bushing (20) associated to an end of the inner arm and forming said head portion (14a).

7. A robot according to claim 6, said bushing (20) having a body part (21) associated to the inner arm (14), and a plurality of tongues (22) forming the elastically deformable elements extending from said body (21).

8. A robot according to claim 7, each of said tongues (22) having substantially a triangular shape, with a bevelled peak (24) and side cuts defining said contact faces (23).

9. A robot according to any of claims 2 to 8, said inner arm (14) being a tube arm having a circular or polygonal cross section.

10. A robot according to claim 9, said removable cap (18) having a passing-through hole (36), having the same shape and dimensions of the cross section of the inner tube arm (14) and providing said sliding guide coupling for the inner arm.

11. A robot according to claim 10, the removable cap (18) having a plurality of elastically deformable tabs (32) disposed around an edge of said passing-through hole (36), said tabs having respective contact surfaces (34) abutting against the inner tube arm (14) and providing a further guide means for the same.

12. A robot according to any of claims 2 to 11, said outer tube arm and inner arm (13, 14) being made of a self-lubricating material.

13. A method for manufacturing an industrial robot (1) according to the delta concept, comprising the provision of a telescopic shaft (10) with opposite ends to be connected to a base section (2) and to a movable plate (3) of said robot (1) respectively, for transmitting a torque from said base section to the movable plate, the telescopic shaft comprising an outer tube arm (13) having a polygonal cross section; an inner arm (14) sliding in the outer tube arm and having a head portion (14a) shaped so as to provide a sliding and torsionally rigid coupling with the polygonal outer tube arm (13), adapted to transmit torque between said outer arm and inner arm; a distal end of said outer tube arm (13), opposite to said first end joint, being sealed with a removable cap (18) providing a sliding guide coupling for the inner arm (14).

## Patentansprüche

1. Teleskopwelle (10) zur Verwendung in einem Roboter (1) nach dem Delta-Konzept, wobei die Teleskopwelle (10) entgegengesetzte Enden aufweist, die mit einem Basisabschnitt (2) und einer bewegbaren Platte (3) des Roboters zu verbinden sind, wenn die Teleskopwelle in den Roboter eingebaut wird, wobei die Teleskopwelle einen Außenrohrarm (13), der ein erstes Endgelenk (16) trägt, und einen koaxialen Innenarm (14) aufweist, der in dem Außenrohrarm gleiten kann und ein zweites Endgelenk (19) trägt, wobei die Teleskopwelle dazu angepasst ist, ein Drehmoment zwischen Innenarm und Außenarm zu übertragen, und wobei:
- der Außenrohrarm (13) einen polygonalen Querschnitt hat;
- der Innenarm (14) einen Kopfabschnitt (14a) aufweist, der so geformt ist, dass er eine gleitende und torsionssteife Verbindung mit dem polygonalen Außenrohrarm (13) bereitstellt, dazu angepasst, zumindest einen Großteil des Drehmoments zwischen Außenarm und Innenarm zu übertragen;
- wobei ein distales Ende (17) des Außenrohrarms (13), das dem ersten Endgelenk (16) entgegengesetzt ist, mit einer abnehmbaren Kappe (18) verschlossen ist, wobei die Kappe eine Gleitführungsverbindung (31, 32) für den Innenarm (14) bereitstellt.

2. Industrieroboter (1) nach dem Delta-Konzept, mit einem Basisabschnitt (2); einer bewegbaren Platte (3), die mittels eines Armsystems (4) mit dem Basisabschnitt verbunden ist; und einer Teleskopwelle (10) nach Anspruch 1 mit entgegengesetzten Enden, die mit dem Basisabschnitt bzw. der bewegbaren Platte verbunden sind.

3. Roboter nach Anspruch 2, wobei der Außenrohrarm (13) einen vierseitigen polygonalen Querschnitt wie z.B. einen rechteckigen oder quadratischen, vorzugsweise quadratischen Querschnitt hat.

4. Roboter nach Anspruch 2 oder 3, wobei der Kopfabschnitt (14a) des Innenarms (14) mit mehreren elastisch verformbaren Elementen (22) versehen ist, die sich an der Innenfläche (13a) des Außenrohrarms (13) abstützen.

5. Roboter nach Anspruch 4, wobei die elastisch verformbaren Elemente (22) Kontaktflächen (23) aufweisen, die sich an der Innenfläche (13a) des Außenrohrarms abstützen, wobei der Kopfabschnitt (14a) des Innenarms so angeordnet ist, dass mindestens eine Kontaktfläche (23) in Kontakt mit jeder Innenfläche des polygonalen Querschnitts des Außenrohrarms (13) ist.

6. Roboter nach Anspruch 5, wobei der Innenarm eine Buchse (20) aufweist, die einem Ende des Innenarms zugeordnet ist und den Kopfabschnitt (14a) bildet.

7. Roboter nach Anspruch 6, wobei die Buchse (20) ein dem Innenarm (14) zugeordnetes Körperteil (21) und mehrere Zungen (22) aufweist, die die elastisch verformbaren Elemente bilden, die sich vom Körper (21) weg erstrecken.

8. Roboter nach Anspruch 7, wobei jede der Zungen (22) eine im Wesentlichen dreieckige Form hat, mit einer abgekanteten Spitze (24) und Seitenschnittflächen, die die Kontaktflächen (23) bilden.

9. Roboter nach einem der Ansprüche 2 bis 8, wobei der Innenarm (14) ein Rohrarm mit einem kreisförmigen oder polygonalen Querschnitt ist.

10. Roboter nach Anspruch 9, wobei die abnehmbare Kappe (18) ein Durchgangsloch (36) aufweist, das dieselbe Form und dieselben Abmessungen wie der Querschnitt des Innenrohrarms (14) hat und für den Innenarm (14) die Gleitführungsverbindung bereitstellt.

11. Roboter nach Anspruch 10, wobei die abnehmbare Kappe (18) mehrere elastisch verformbare Laschen (32) aufweist, die um einen Rand des Durchgangslochs (36) herum angeordnet sind, wobei die Laschen jeweilige Kontaktflächen (34) aufweisen, die sich am Innenrohrarm (14) abstützen und eine weitere Führungseinrichtung für diesen bilden.

12. Roboter nach einem der Ansprüche 2 bis 11, wobei der Außenrohrarm und der Innenarm (13, 14) aus einem selbstschmierenden Material hergestellt sind.

13. Verfahren zur Herstellung eines Industrieroboters (1) gemäß dem Delta-Konzept, umfassend die Bereitstellung einer Teleskopwelle (10) mit entgegengesetzten Enden, die mit einem Basisabschnitt (2) bzw. einer bewegbaren Platte (3) des Roboters (1) zu verbinden sind, um ein Drehmoment von dem Basisabschnitt zur bewegbaren Platte zu übertragen, wobei die Teleskopwelle einen Außenrohrarm (13) mit einem polygonalen Querschnitt; und einen Innenarm (14) aufweist, der in dem Außenrohrarm gleitet und einen Kopfabschnitt (14a) hat, der so geformt ist, dass er eine gleitende und torsionssteife Verbindung mit dem polygonalen Außenrohrarm (13) bereitstellt, dazu angepasst, ein Drehmoment zwischen dem Außenarm und dem Innenarm zu übertragen; wobei ein distales Ende des Außenrohrarms (13), das dem ersten Endgelenk entgegengesetzt ist, mit einer abnehmbaren Kappe (18) verschlossen ist, die eine Gleitführungsverbindung für den Innenarm (14) bereitstellt.

## Revendications

1. Arbre télescopique (10) pour une utilisation dans un robot (1) conformément au concept delta, l'arbre télescopique (10) ayant des extrémités opposées à raccorder à une partie de base (2) et à une plaque mobile (3) dudit robot, lorsque l'arbre télescopique est monté dans le robot, l'arbre télescopique comportant un bras de tube extérieur (13) portant une première articulation d'extrémité (16) et un bras intérieur coaxial (14) pouvant coulisser à l'intérieur du bras de tube extérieur et portant une seconde articulation d'extrémité (19), ledit arbre télescopique étant adapté pour transmettre un couple de l'un à l'autre desdits bras intérieur et bras extérieur, et dans lequel :
- ledit bras de tube extérieur (13) a une section transversale polygonale,
- ledit bras intérieur (14) a une partie de tête (14a) formée de manière à assurer un couplage coulissant et rigide en torsion avec le bras de tube extérieur polygonal (13), adapté pour transmettre au moins une majeure partie dudit couple entre lesdits bras extérieur et bras intérieur,
- une extrémité distale (17) dudit bras de tube extérieur (13), opposée à ladite première articulation d'extrémité (16), est rendue étanche avec un couvercle amovible (18), ledit couvercle assurant un couplage de guidage coulissant (31, 32) pour le bras intérieur (14).

2. Robot industriel (1) selon le concept delta, comportant une partie de base (2), une plaque mobile (3) reliée à la partie de base au moyen d'un système de bras (4), et un arbre télescopique (10) selon la revendication 1 avec des extrémités opposées respectivement reliées à la partie de base et à la plaque mobile.

3. Robot selon la revendication 2, le bras de tube extérieur (13) ayant une section transversale polygonale à quatre côtés, telle que rectangulaire ou carrée, de préférence une section transversale carrée.

4. Robot selon la revendication 2 ou 3, ladite partie de tête (14a) du bras intérieur (14) étant munie d'une pluralité d'éléments élastiquement déformables (22) venant en butée contre la surface interne (13a) du bras de tube extérieur (13).

5. Robot selon la revendication 4, lesdits éléments élastiquement déformables (22) ayant des faces de contact (23) venant en butée contre la surface interne (13a) du bras de tube extérieur, la partie de tête (14a) du bras intérieur étant agencée de manière à avoir au moins une face de contact (23) en contact avec chaque face interne de la section transversale polygonale du bras de tube extérieur (13).

6. Robot selon la revendication 5, le bras intérieur comportant une douille (20) associée à une extrémité du bras intérieur et formant ladite partie de tête (14a).

7. Robot selon la revendication 6, ladite douille (20) ayant une partie de corps (21) associée au bras intérieur (14), et une pluralité de languettes (22) formant les éléments élastiquement déformables s'étendant à partir dudit corps (21).

8. Robot selon la revendication 7, chacune desdites languettes (22) ayant une forme sensiblement triangulaire, avec une pointe biseautée (24) et des coupes latérales définissant lesdites faces de contact (23).

9. Robot selon l'une quelconque des revendications 2 à 8, ledit bras intérieur (14) étant un bras de tube ayant une section transversale circulaire ou polygonale.

10. Robot selon la revendication 9, ledit couvercle amovible (18) ayant un trou traversant (36), ayant les mêmes forme et dimensions que la section transversale du bras de tube intérieur (14) et assurant ledit couplage de guidage coulissant pour le bras intérieur.

11. Robot selon la revendication 10, le couvercle amovible (18) ayant une pluralité de pattes élastiquement déformables (32) disposées autour d'un bord dudit trou traversant (36), lesdites pattes ayant des surfaces de contact respectives (34) venant en butée contre le bras de tube intérieur (14) et fournissant des moyens de guidage supplémentaires pour celui-ci.

12. Robot selon l'une quelconque des revendications 2 à 11, lesdits bras de tube extérieur et bras de tube intérieur (13, 14) étant constitués d'un matériau autolubrifiant.

13. Procédé pour fabriquer un robot industriel (1) selon le concept delta, comportant la fourniture d'un arbre télescopique (10) avec des extrémités opposées à raccorder à une partie de base (2) et à une plaque mobile (3) dudit robot (1) respectivement, pour transmettre un couple de ladite partie de base à la plaque mobile, l'arbre télescopique comportant un bras de tube extérieur (13) ayant une section transversale polygonale, un bras intérieur (14) coulissant dans le bras de tube extérieur et ayant une partie de tête (14a) formée de manière à assurer un couplage coulissant et rigide en torsion avec le bras de tube extérieur polygonal (13), adapté pour transmettre un couple entre lesdits bras extérieur et bras intérieur, une extrémité distale dudit bras de tube extérieur (13), opposée à ladite première articulation d'extrémité, étant rendue étanche avec un couvercle amovible (18) assurant un couplage de guidage coulissant pour le bras intérieur (14).
